# EUROPEAN PATENT APPLICATION

(11) **EP 1 670 003 A1**
(43) Date of publication of application: **14.06.2006**
(21) Application number: 05025428.3
(22) Date of filing: 22.11.2005
(51) Int. Cl.: H01B 1/12, H01B 1/20, C08K 5/00

(54) **Modified conductive polymer and conductive element using the same**

(30) Priority: 13.12.2004 JP 2004360103
(71) Applicant: THE YOKOHAMA RUBBER CO., LTD., Tokyo 105-8685 (JP)
(72) Inventor: Maruyama, Tsukasa, 2-1, Oiwake Hiratsuka-shi Kanagawa (JP); Sekine, Yuko, 2-1, Oiwake Hiratsuka-shi Kanagawa (JP)
(74) Representative: HOFFMANN EITLE

(57) **Abstract**

A modified conductive polymer containing a conducting polymer chemically treated with a radical species, whereby an organic polymer composition having small variation in electrical resistance value and environmental dependency and exhibiting stable electrical characteristics and a conductive member using the same are provided.

## Description

### BACKGROUND OF THE INVENTION

### 1. Field of Invention

The present invention relates to a modified conductive polymer chemically treated with a radical species and an organic polymer composition containing the same and to a conductive member using the composition. This conductive member is useful as a conductive member such as a transfer roll, charge-carrying roller, transfer belt of an electronic photo recording apparatus such as a copier, color printer.

### 2. Description of the Related Art

Conductive agents are formulated into organic polymers for the purpose of imparting conductivity to the organic polymers. As such conductive agents, conductive fillers such as carbon black, metal oxide fine particles, are used. In organic polymer compositions containing conductive fillers such as carbon black dispersed in organic polymers, since it is difficult to uniformly disperse the conductive filler in the organic polymer, it has been difficult to control the electrical resistance of the organic polymer composition to a required value or to make it uniform in the composition. On the other hand, conductive agerits such as ion conductive agents, ion conductive resins can be uniformly dispersed in an organic polymer, and therefore, the variation of the electrical resistance can be suppressed and made uniform, but there is the defect that control of the electrical resistance to the required value is difficult. Further, the electrical resistance is susceptible to the effects of moisture etc. The resistance value measured under a high temperature and high humidity condition and the resistance value measured under a low temperature and a low humidity condition differ by as much as two orders of magnitude. Thus, there is a defect that an environmental dependency in the electrical resistance is exhibited.

On the other hand, a conducting polymer dispersed in an organic polymer has also been reported. As the method for dispersing a conducting polymer in an organic polymer, the method for mixing and dispersing an organic polymer and a conducting polymer in a solvent or the method for mixing an organic polymer and conducting polymer may be mentioned. However, a conducting polymer does not melt and does not dissolve in the doped state (i.e., conductive state), and therefore, it is necessary to disperse a conducting polymer in the undoped state (i.e., non-conductive state) in an organic polymer, then make the polymer conductive by a dopant. The process is therefore complicated and it is difficult to uniformly treat the composition to make it conductive. Control of the electrical resistance is difficult. Further, when dispersing a conductive polymer in the conductive state in an organic polymer, the solubility between.the organic polymer and the conducting polymer is not necessarily high, and therefore, the conducting polymer cannot be uniformly dispersed in the organic polymer. Therefore, there were the problems that the variation in the electrical resistance of the organic polymer composition becomes large and control of the resistance value is difficult (see Japanese Patent Publication (Kokai) No. 2004-277455A and Japanese Patent Publication (Kokai) No. 2004-205617A)

### DISCLOSURE OF INVENTION

Accordingly, the object of the present invention is to provide an organic polymer composition having small variation in the electrical resistance thereof and small environmental dependency and exhibiting stable electrical characteristics and to provide a conductive member using the same.

Another object of the present invention is to provide a modified conductive polymer chemically treated with a radical species capable of fabricating an organic polymer composition having the above characteristics by mixing with and dispersing in an organic polymer.

In accordance with the present invention, there is provided a modified conductive polymer comprising a conductive polymer chemically treated with a radical species.

By modifying the conductive polymer by chemical treatment with a radical species according to the present invention, it is possible to uniformly disperse the conductive polymer in an organic polymer and possible to obtain an organic polymer composition and conductive member having stable electrical characteristics.

### Best Mode For Carrying out the Invention

The conductive polymer chemically treated with a radical species according to the present invention (hereinafter referred to as a "conductive polymer") can be obtained by chemical oxidative polymerization of a monomer in the copresence of a doping agent (i.e., dopant). As such a monomer, for example, aniline, thiophene, pyrrole and their derivatives may be illustrated. As the derivatives, derivatives having at least one alkyl group, alkenyl group, alkoxy group, alkylthio group, aryl group, aryloxy group, alkylaryl group, arylalkyl group or alkoxyalkyl group as a substituent.

The oxidizing agent for the oxidative polymerization is not particularly limited so long as it can polymerize the above-mentioned monomers. For example, persulfuric acids such as ammonium persulfate, persulfuric acid, sodium persulfate, potassium persulfate; or redox initiators such as hydrogen peroxide-ferrous salt; or hydrogen peroxide, ferric chloride, ferric sulfate, potassium dichromate, potassium permanganate, etc. may be preferably used. These oxidizing agents may be used alone or in any combinations of two or more types. The amount of use of the oxidizing agent is not particularly limited so long as it is an amount capable of oxidatively polymerizing the monomers, but is preferably 0.01 to 10 moles, more preferably 0.1 to 5 moles, based upon one mole of the monomer.

The dopant to be copresent at the time of the oxidative polymerization is not particularly limited so long as it is a dopant usable in the oxidative polymerization of conductive polymers in the past. For example, inorganic acids such as hydrochloric acid, sulfuric acid, nitric acid, perchloric acid, or organic acids such as nitrobenzoic acid, trichloroacetic acid, sulfonic acid may be illustrated. These may be used alone or may be used in any combinations of two or more types. As a preferable dopant, a sulfonic acid may be illustrated. Specifically, an aliphatic, aromatic or cyclic aliphatic sulfonic acid having one or more sulfonic acid groups and their salts such as an alkyl sulfonic acid, aryl sulfonic acid, alkylaryl sulfonic acid, α-olefin sulfonic acid, a sulfonic acid of a higher aliphatic ester, (di)alkyl sulfosuccinic acid, a sulfonic acid of a higher fatty acid amide, camphor sulfonic acid and their salts may be mentioned. Further, a polymeric acid having a sulfonic acid group and the salts thereof such as a polystyrene sulfonic acid, polyethylene sulfonic acid, poly(meth)acrylamide-2-methylpropane sulfonic acid, polyisoprene sulfonic acid, and their salts may be illustrated. The amount of the dopant used is not particularly limited, but preferably 0.01 to 5 moles, more preferably 0.1 to 3 moles, per mole of the monomer is used.

The radical species according to the present invention is not particularly limited so long as it can chemically treat the conductive polymer, but is formed by heating or irradiation of light from the following compounds. As the compounds for forming the radical species, an azo compound, thiol compound, disulfide compound, peroxo compound, azide compound and carbonyl compound may be illustrated. The compound forming the radical species may be used alone or in any combinations of two or more types. Preferably, an azo compound, thiol compound, disulfide compound and peroxo compound may be mentioned. As an azo compound, specifically, 2,2'-azobisisobutyronitrile, 2,2'-azobis(4-methoxy-2,4-dimethylvaleronitrile), 2,2'-azobis(2,4-dimethylvaleronitrile), 2,2'-azobis{2-methyl-N-[1,1-bis(hydroxymethyl)-2-hydroxyethyl]propionamide}, 2,2'-azobis[2-methyl-N-(2-hydroxyethyl)-propidnamide], 2,2'-azobis[N-(2-propenyl)-2-methylpropionamide], 2,2'-azobis[N-butyl-2-methylpropionamide], dimethyl 2,2'-azobis(2-methylpropionate), 4,4'-azobis(4-cyanopentanoic acid), etc. may be mentioned. Further, an azo group-containing polymer compound having the following formula (I) may also be illustrated. 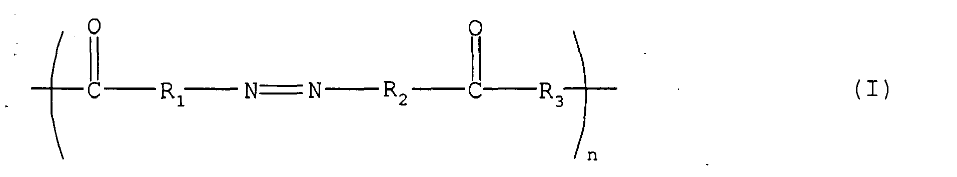 wherein R₁ and R₂ are independently bivalent hydrocarbon groups which may contain hetero atoms and may have a substituent such as an alkyl group, alkenyl group, alkoxy group, alkylthio group, aryl group, hydroxyalkyl group, alkoxycarbonyl group, formyl group, cyano group, carboxyl group, hydroxy group, etc. bonded thereto. Further, R₃ is a group having NH or O at the two ends, where n indicates a natural number.

As specific examples of an azo-group-containing polymer compound, the following formula (II) or (III) may be mentioned. VPS-0501, VPS-1001, VPE-0201, VPE-0401 and VPE-0601, available from Wako Pure Chemical Industries may be used. VPS-0501 and VPS-1001 are azo-group-containing polymer compounds having the following structure. VPS-0501 has a molecular weight of the polydimethyl siloxane portion of about 5000, while VPS-1001 has a molecular weight of the polydimethyl siloxane portion of about 10000. 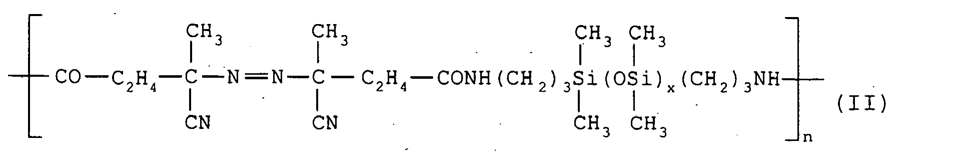 VPE-0201, VPE-0401 having and VPE-0601 are azo-group containing polymer compounds having the following structure. VPE-0201 has a molecular weight of the polyethylene oxide portion of about 2000, VPE-0401 has a molecular weight of the polylethylene oxide portion of about 4000 and VPE-0601 has a molecular weight of the polyethylene oxide portion of about 6000.

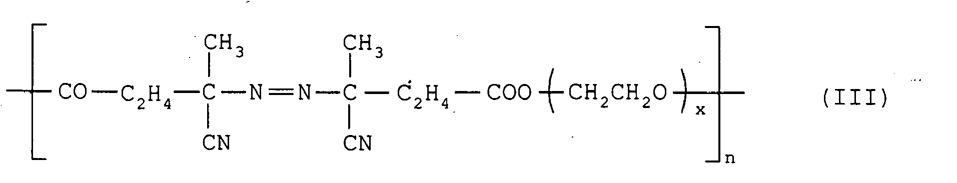

As a thiol compound, octanethiol, dodecanethiol, mercaptoethanol, mercaptopropionic acid, thioglycerol, benzenethiol, mercaptobenzoic acid, etc. may be mentioned.

As a disulfide compound, dithiodiethyl, dithiodipropyl, dithiodibutyl, dithiodiethanol, dithiodipropanol, dithiodipropionic acid, dimethyl dithiodipropionate, dithiodiphenyl, dibenzyldisulfide, etc. may be mentioned.

As a peroxo compound, benzoyl peroxide, dicumyl peroxide, t-butylcumyl peroxide, cumen hydroperoxide, acetyl peroxide, propionyl peroxide, butyryl peroxide, etc. may be mentioned.

The modified conductive polymer chemically treated with a radical species of the present invention (hereinafter referred to as a "modified conductive polymer") can be obtained by the following methods, but the invention is not limited thereto.
(a) The method for reacting a conductive polymer dispersion containing a conductive polymer dispersed in a solvent and a compound forming a radical species (note: in this method, the compound forming a radical species may be added directly to the conductive polymer dispersion or added after dissolved and/or dispersed in a solvent).
(b) The method for treating and reacting a conductive polymer powder with a solution containing a compound forming a radical species dissolved in a solvent.
(c) The method for mixing and reacting a conductive polymer powder and powder of a compound forming a radical species.

The preferable methods among these methods are (a) and (b). The most preferable method is (a), since the conductive polymer can be efficiently chemically treated with a radical species. The term "dispersion" used herein indicates the presence in mixture of a state of fine particles of a conductive polymer dispersed in a solvent and a state of the conductive polymer dissolved in the solvent.

The solvent for dispersion of the conductive polymer is not particularly limited so long as it is a solvent capable of dispersing a conductive polymer, but, for example, aromatic hydrocarbon such as toluene, xylene, glycol ether ester such as diethyleneglycol diacetate, dipropyleneglycol dibutyrate, hexyleneglycol diacetate, glycol diacetate, ketones such as acetone, methylethyl ketone, ethylbutyl ketone, diisobutyl ketone, fatty acid esters such as ethyl acetate, ethyl propionate, alcohols such as methanol, ethanol, propanol, butanol, alcohol; N,N-dimethylformamide, N,N-dimethylacetoamide, N,N-diethylformamide, N,N-diethylacetoamide, N-methyl-2-pyrrolidone, dimethylsulfoxide, tetramethylene sulfone, sulphorane, hexamethylphosphoric triamide, water, etc. may be illustrated. The above solvent may be used alone or used in any combinations of two or more types. As the solvent for dissolving and/or dispersing the compound forming a radical species, the above-exemplified solvents illustrated as a solvent for dispersing the conductive polymer may be used.

As the conductive polymer dispersion, the polyaniline dispersion disclosed in the specification of Japanese Patent Application No. 2003-349793, the aqueous sulfonated polyaniline dispersion made by Mitsubishi Rayon (tradename aqua SAVE), the aqueous polyethylene dioxythiophene dispersion made by Bayer (tradename Baytron P), etc. may.be used.

The conductive polymer chemically treated with a radical species may be doped or undoped in state. When using an undoped conductive polymer, the chemical treatment with the radical species is performed in the presence of a dopant so as to simultaneously perform the chemical treatment with the radical species and the doping treatment and a modified conductive polymer chemically treated with a radical species in the doped state can be obtained. Further, when an undoped conductive polymer is used, by performing chemical treatment with a radical species, then a using dopant for treatment, a conductive polymer chemically treated with a radical species is also obtained in the doped state. When using a doped conductive polymer, it is also possible to perform the chemical treatment reaction with the radical species in the presence of a dopant.

As the dopant, in addition to the above-mentioned dopants, aliphatic sulfonic acid group-containing monomers such as (meth)acrylamide-2-methylpropane sulfonic acid, vinyl sulfonic acid, methacroyloxyethylene sulfonic acid, 2-methyl-1,3-butadiene-1-sulfonic acid, aromatic sulfonic acid group-containing monomers such as styrene sulfonic acid, sulfophenyl maleimide, or salts' thereof may be mentioned.

The reason between the radical species and the conductive polymer is performed under heating or irradiation by light. The compound forming the radical species is preferably used in an amount of 0.01 to 30 parts by weight more preferably in an amount of 0.05 to 20 parts by weight, based upon 100 parts by weight of the conducting polymer. Further, the reaction temperature is 20°C to 180°C, preferably 40°C to 150°C.

In the organic polymer composition of the present invention, the chemically treated conductive polymer is introduced in an amount of preferably 0.05 to 80 parts by weight, more preferably 0.1 to 60 parts by weight, based upon 100 parts by weight of the organic polymer. If the amount introduced is too small, the volume resistivity of the organic polymer composition is liable to become 10¹⁴ Ω·cm or more, whereas if too large, an effect commensurate with the amount added is liable not to be obtained.

The organic polymer usable in the organic polymer composition of the present invention is not particularly limited. As a preferable example, rubbers such as natural rubber, isoprene rubber, nitrile rubber (e.g., acrylonitrile-butadiene rubber, acrylonitrile-styrene-butadiene rubber, etc.), hydrogenated nitrile rubber, butadiene rubber, styrene-butadiene rubber, butyl rubber, halogenated butyl rubber, ethylene-α-olefin rubber (e.g., ethylene-propylene rubber, ethylene-propylene-nonconjugated diene rubber, ethylene-butene-nonconjugated diene rubber, etc.), polynorbornene rubber, acryl rubber, fluororesin, silicone resin, ethylene-vinyl acetate rubber, epichlorohydrin rubber, epichlorohydrin-ethylene oxide copolymer rubber, chlorinated polyethylene rubber, chloroprene rubber, chlorosulfonated polyethylene rubber, fluorinated rubber, polyurethane rubber, polyolefin resins such as polyethylene, polypropylene, polyester resins such as polyethylene terephthalate, polyethylene naphthalate, polybutylene terephthalate, polyamide resins such as Nylon 6, Nylon 6,6, epoxy resin such as bisphenol A-type epoxy resin, a novolak type epoxy resin, polyimide-based resin such as polyamide-imide, polyamic acid, polyimide, fluororesins such as polyfluorinated vinylidene resins such as modified PPE resin, polycarbonate resin, polyacetal resin or modified products thereof may be mentioned.

The organic polymer composition of the present invention can be obtained by mixing an organic polymer and a chemically treated modified conductive polymer. The method for mixing is not particularly limited. The method for mixing the modified conductive polymer and organic polymer by a mixing machine may be mentioned. As the mixing machine, a roll, kneader, Banbury mixer, twinscrew extruder, etc. may be mentioned. Further, the organic polymer composition of the present invention may also be obtained by the method for mixing a dispersion of a modified conductive polymer and organic polymer dissolved or dispersed in a solvent in advance. The solvent for dissolving or dispersing the organic polymer is not particularly limited, but a solvent which is compatible with the solvent of the dispersion of the chemically treated modified conductive polymer is preferable. The method for mixing is not particularly limited so long as the chemically treated modified conductive polymer and the organic polymer can be efficiently mixed, but the method for simple stirring and mixing and the method for mixing using a sand mill, bead mill, bore mill, triple-roll mill, colloid mill, ultrasonic homogenizer, jet mill, or other disperser may be mentioned. Further, the organic polymer composition of the present invention can be obtained by mixing an organic polymer and a chemically treated modified conductive polymer dissolved or dispersed in a plasticizer or a process oil used for improving the processability and flexibility of an organic polymer mixed together in advance.

Further, the organic polymer composition of the present invention can be obtained by mixing the modified conductive polymer and/or its dispersion and a filler such as carbon black, silica, talc, usable as a filler of the organic polymer mixed in advance and the organic polymer. Further, the organic polymer composition of the present invention can be obtained by mixing the filler treated with a dispersion of the modified conductive polymer with the organic polymer.

The organic polymer composition of the present invention may contain, as other ingredients, for example, fillers such as carbon black, silica, talc, a vulcanization or cross-linking agent, a vulcanization or cross-linking accelerator, a silane coupling agent, various types of oil, an antioxidant, an antioxidizing agent, a UV absorbent, a photostabilizer, a flame retardant, a plasticizer, or any other various types of additives generally blended into rubber or resins in the amounts added in the past. The organic polymer composition of the present invention may contain an ion conductive agent and electron conductive agent to an extent not detracting from the object of the present invention. As the ion conductivity agent, for example, a quaternary ammonium salt, borate, surfactant, etc. may be mentioned. As the electron conductive agent, carbon black, conductive zinc oxide, conductive titanium oxide, conductive tin oxide, graphite, carbon nanotubes, carbon staple fibers, etc. may be mentioned.

The modified conductive polymer chemically treated with a radical species of the present invention has a good dispersion with respect to a solvent and organic polymer. As a result, the organic polymer composition containing the modified conductive polymer and the organic polymer has little variation in electrical resistance value and environmental dependency, enables control of the electrical resistance, and exhibits stable electrical characteristics. Further, the organic polymer composition of the present invention, having these characteristics, is useful as a conductive belt, conductive roll, conductive blade, or other conductive member used in OA equipment and an anti-static agent and packaging material for preventing electrostatic disorder in electronic components. Further, the organic polymer composition of the present invention can also be utilized for an electromagnetic wave shield, actuator, etc.

### EXAMPLES

The present invention will now be explained more specifically based on Examples and Comparative Examples, but the present invention is by no means limited to the following Examples.

### Reaction Example 1: Preparation of Conductive Polyaniline Dispersion

6 g of aniline and 21 g of dodecyl benzene sulfonate were dissolved in 300 g of toluene, then 100 g of distilled water containing 10.8 ml of hydrochloric acid having a concentration of 6 ml/liter dissolved therein was added. This mixed solution was cooled to 5°C or less, then 100 g of distilled water containing 16.2 g of ammonium persulfate dissolved therein was added. This solution was oxidatively polymerized under conditions of 5°C or less for 7 hours, then 450 g of toluene was added to the reaction solution. Further, a mixed solution containing 150 g of water, in which 80 g of methanol was dissolved, was added and stirred. When the stirring was stopped and the reaction solution allowed to stand, the reaction solution separated into the two layers of a toluene layer and a water-methanol layer. The toluene layer, in which the conductive polyaniline was dispersed, was recovered.

### Reaction Example 2: Preparation of Chemically Treated Modified Conductive Polyaniline Dispersion 1

20 g of an NMP solution containing 0.7 g of an azo compound, 4,4'-azobis-(4-cyanovaleric acid) was added to 80 g of a conductive polyaniline dispersion obtained in Reaction Example 1. The solution was reacted under nitrogen at 70°C for 16 hours, then the toluene was removed by heating under vacuum to obtain an NMP dispersion 1 of a chemically treated modified conductive polyaniline (3% by weight of polyaniline content). Part of the modified conductive polyaniline NMP dispersion was recovered and the NMP was removed by heating under vacuum to obtain a green powder. This powder was treated with aqueous ammonia, then was washed with water and dried to obtain an undoped polyaniline powder. The infrared absorption spectrum of this powder exhibited absorption derived from carbonyl groups near 1700 cm⁻¹, and therefore, it was confirmed that the conductive polyaniline was chemically treated with a radical species formed from 4,4'-azobis-(4-cyanovaleric acid).

### Reaction Example 3: Preparation of Chemically Treated Modified Conductive Polyaniline Dispersion 2

20 g of an NMP solution containing 0.7 g of a polymer-based azo compound VPE-201 (made by Wako Pure Chemical Industries) was added to 80 g of a conductive polyaniline dispersion obtained in Reaction Example 1. The solution was reacted under nitrogen at 70°C for 16 hours, then the toluene was removed by heating under vacuum to obtain an NMP dispersion 2 of a chemically treated modified conductive polyaniline (3% by weight of polyaniline content). Part of the modified conductive polyaniline NMP dispersion was recovered and the NMP was removed by heating under vacuum to obtain a green powder. This powder was treated by aqueous ammonia, then was washed with water and dried to obtain an undoped polyaniline powder. The infrared absorption spectrum of this powder exhibited absorption derived from polyether chains near 1100 cm⁻¹, and therefore, it was confirmed that the conductive polyaniline was chemically treated with a radical species formed from a polymer-based azo compound.

### Reaction Example 4: Preparation of Chemically Treated Modified Conductive Polyaniline Dispersion 3

0.7 g of the polymer-based azo compound VPS-501 (made by Wako Pure Chemical Industries) was added to 80 g of a conductive polyaniline dispersion obtained in Reaction Example 1. The dissolution of the starting agent was confirmed, then 20 g of NMP was added and the resultant mixture reacted under nitrogen at 70°C for 16 hours to thereby obtain an NMP dispersion 3 of a chemically treated modified conductive polyaniline (3% by weight of polyaniline content). A part of the modified conductive polyaniline NMP dispersion was recovered and the NMP was removed by heating under vacuum to obtain a green powder. This powder was treated with aqueous ammonia, then was washed with water and dried to obtain an undoped polyaniline powder. The infrared absorption spectrum of this powder exhibited absorption derived from siloxane bonds near 1000 cm⁻¹, and therefore it was confirmed that the conductive polyaniline was chemically treated with a radical species formed from a polymer-based azo compound.

### Reaction Example 5: Preparation of Chemically Treated Modified Conductive Polyaniline

0.7 g of the azo compound 2,2'-azobis(N-butyl-2-methylpropylamide) (made by Wako Pure Chemical Industries) was added to 80 g of a conductive polyaniline dispersion obtained in Reaction Example 1. The dissolution of the starting agent was confirmed, then the solution was reacted under nitrogen at 70°C for 16 hours to thereby obtain a toluene dispersion of a chemically treated modified conductive polyaniline. The toluene was removed by heating under vacuum from the modified conductive polyaniline toluene dispersion to obtain a green powder in an amount of 2.3 g. A part of this powder was sampled and treated with aqueous ammonia, then was washed with water and dried to obtain an undoped polyaniline powder. The infrared absorption spectrum of this powder exhibited absorption derived from amide bonds near 1650 cm⁻¹, and therefore it was confirmed that the conductive polyaniline was chemically treated with a radical species formed from a polymer-based azo compound.

### Example 1

7.0 g of a chemically treated modified conductive polyaniline dispersion obtained in Reaction Example 2 was added to and mixed with 10 g of an NMP solution, in which polymethyl methacrylate (made by Aldrich, weight average molecular weight of 120,000) was dissolved (concentration of 20% by weight) to prepare an NMP dispersion containing the chemically treated modified conductive polyaniline and polymethyl methacrylate (i.e., organic polymer composition 1). The NMP dispersion was coated on a glass substrate, then was heat treated at 150°C for 1 hour to obtain a conductive polyaniline-containing polymethyl methacrylate film having a thickness of 150 µm.

### Example 2

7.0 g of a chemically treated modified conductive polyaniline dispersion obtained in Reaction Example 3 was added to and mixed with 10 g of an NMP solution, in which polymethyl methacrylate (made by Aldrich, weight average molecular weight of 120,000) was dissolved (concentration of 20% by weight), to prepare an NMP dispersion containing the chemically treated modified conductive polyaniline and the polymethyl methacrylate (i.e., organic polymer composition 2). The NMP dispersion was coated on a glass substrate, then was heat treated at 150°C for 1 hour to obtain a conductive polyaniline-containing polymethyl methacrylate film having a thickness of 150 µm.

### Example 3

5.7 g of a chemically treated modified conductive polyaniline NMP dispersion obtained in Reaction Example 4 was added to and mixed with 10 g of a polyamide acid NMP solution (made by Ube Industries, polyimide varnish "U-Varnish-A" (solid content 18% by weight)) to prepare an NMP dispersion containing the chemically treated modified conductive polyaniline and polyamide acid (i.e., organic polymer composition 3). The NMP dispersion was coated on a glass substrate, then was heat treated at 150°C for 1 hour, 200°C for 30 minutes and 300°C for 40 minutes to obtain a conductive polyaniline-containing polyimide film having a thickness of 150 µm.

### Example 4

20 g of a chemically treated modified conductive polyaniline obtained in Reaction Example 5 was mixed in 100 g of SBR (made by Nippon Zeon, Nipol 1502) using a roll to obtain SBR containing chemically treated modified conductive polyaniline (i.e., organic polymer composition 4). To this organic polymer composition 4, 3 g of zinc white (made by Seido Chemical Industry, Zinc White No. 3), 1 g of stearic acid (made by NOF Corporation), 1 g of a vulcanization accelerator (N-t-butyl-2-benzothiazole sulfenamide) (made by Ouchi Shinko Chemical, Noccelar NSP), 1.7 g of sulfur (made by Tsurumi Chemical), and 1 g of an antioxidant (i.e., N-phenyl-N'-1,3-dimethylbutyl-p-phenylene diamine) (made by Flexsis, Santoflex 6PPD) were mixed using a roll, then the resultant mixture was press formed in a 500 x 500 x 1 mm mold at 180°C for 30 minutes to prepare a vulcanized rubber sheet.

### Comparative Example 1

A undoped polyaniline powder (made by Aldrich) was dissolved in NMP to obtain a 10% by weight polyaniline NMP solution. 1.8 g of this polyaniline NMP solution was added to and mixed in a polyamide acid NMP solution (Ube Industries, polyimide varnish "U-Varnish-A" (solid content 18%)). This solution was used to obtain a conductive polyaniline-containing polyimide film in the same way as Example 3 in a thickness of 150 µm. The polyimide film thus obtained was dipped at room temperature for 30 minutes in a dopant solution prepared by dissolving 100 g of a p-toluene sulfonic acid in a mixed solvent of 400 g of distilled water and 500 g of methanol to obtain a conductive polyaniline-containing polyimide film.

### Comparative Example 2

0.2 g of a doped polyaniline powder (made by Aldrich) was added to and mixed with 10 g of a polyamide acid NMP solution (Ube Industries, polyimide varnish "U-Varnish-A" (solid content 18%)). This solution was used to obtain a conductive polyaniline-containing polyimide film in the same way as Example 3 in a thickness of 150 µm. The surface of a polyimide resin belt exhibited particles of polyaniline, and the resin surface was not smooth.

### Comparative Example 3

25 g of carbon black (made by Mitsubishi Chemical, MA-100) was added to and mixed with 100 g of a polyamide acid NMP solution (Ube Industries, polyimide varnish "U-Varnish-A" (solid content 18% by weight)). This solution was used to obtain a conductive polyaniline-containing polyimide film in the same way as Example 3 in a thickness of 150 µm.

The films obtained above were evaluated for the following four items. The results are shown in Table I.
(1) Volume resistivity: A resistance measuring device (made by Advantest, R8340A) was used to measure the volume resistivity when applying a voltage of 250V to a sample for 30 seconds.
(2) In-plane variation of volume resistivity:
   Volume resistivity at 24 locations in plane of sheet measured, logarithmic values of volume resistivity taken, and difference between maximum value and minimum value calculated.
(3) Environmental dependency: Difference of logarithmic values of volume resistivity values under environments of high temperature and high humidity (40°C, 80% RH) and low temperature and low humidity (10°C, 15% RH) calculated.
(4) Surface smoothness: Smooth of surface observed visually.

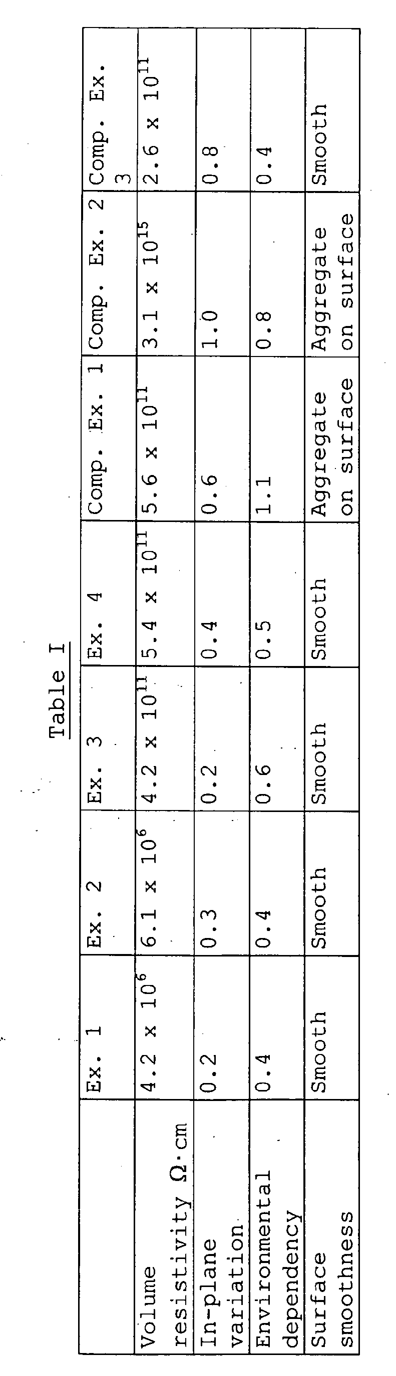

The organic polymer composition containing a modified conductive polymer chemically treated with a radical species of the present invention does not exhibit any aggregate on the film surface due to the modified conductive polymer is uniformly dispersed in the organic polymer, is smooth in shape, has little variation in the electrical resistance value in the plane of the film, and is superior in characteristics with respect to environmental dependency. The organic polymer composition of the present invention having such a characteristic is useful as a conductive belt, conductive roll, conductive blade, or other conductive member used for OA equipment and an anti-static agent and packaging for preventing electrostatic disorders in electronic components etc.

## Claims

1. A modified conductive polymer comprising a conductive polymer chemically treated with a radical species.

2. A modified conductive polymer as claimed in claim 1, wherein the conductive polymer to be chemically treated is at least one polymer selected from polyaniline, polythiophene, polypyrrole and their derivatives.

3. A modified conductive polymer as claimed in claim 1 or 2, wherein the radical species is formed from an azo compound, thiol compound, disulfide compound and peroxo compound.

4. An organic polymer composition comprising a modified conductive polymer according to any one of claims 1 to 3 and an organic polymer.

5. An organic polymer composition as claimed in claim 4, wherein the modified conductive polymer is in an amount of 0.05 to 80 parts by weight, based upon 100 parts by weight of organic polymer.

6. An organic polymer composition as claimed in claim 4 or 5, wherein a volume resistivity is 10² to 10¹³ Ω · cm⁻¹.

7. A conductive member using an organic polymer composition according to any one of claims 4 to 6.
